**Europäisches Patentamt**

**European Patent Office**

**Office européen des brevets**

(19)

(11) Publication number : **0 297 064 B1**

## (12) EUROPEAN PATENT SPECIFICATION

(45) Date of publication of patent specification :
**29.07.92 Bulletin 92/31**

(51) Int. Cl.⁵ : **F16C 33/66, F16N 11/04, F16N 29/02**

(21) Application number : **88850186.3**

(22) Date of filing : **27.05.88**

(54) Lubricating apparatus for bearings.

(30) Priority : **23.06.87 SE 8702597**

(43) Date of publication of application :
**28.12.88 Bulletin 88/52**

(45) Publication of the grant of the patent :
**29.07.92 Bulletin 92/31**

(84) Designated Contracting States :
**DE FR GB IT**

(56) References cited :
**EP-A- 0 030 911**
**FR-A- 877 500**
**US-A- 2 007 482**
**PATENT ABSTRACTS OF JAPAN vol. 6, no. 36**
**(M-115)(914), 5th March 1982; & JP-A-56 150**
**680 (TLV K.K.) 21-11-1981**

(56) References cited :
**PATENT ABSTRACTS OF JAPAN vol. 5, no 183**
**(133)(M-97), 21st November 1981; & JP-A-56**
**105 174 (AISHIN SEIKI K.K.)21-08-1981**
**PATENT ABSTRACTS OF JAPAN vol. 8, no. 26**
**(M-273)(1463), 3rd February 1984; & JP-A-58**
**184 374 (TOKYO SHIBAURA DENKI K.K.)27-**
**10-1983**

(73) Proprietor : **SKF MEKANPRODUKTER AB**
**Fredsgatan 3 Box 89**
**S-641 21 Katrineholm (SE)**

(72) Inventor : **Wengeler, Ulf**
**Fägelvägen 23**
**S-302 37 Halmstad (SE)**

(74) Representative : **Forsberg, Lars-Ake**
**SKF NOVA AB Patent Department**
**S-415 50 Göteborg (SE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an apparatus for automatic lubrication of bearings, which apparatus incorporates a feeding device for grease and a valve member intended to be connected to a bearing housing.

Background of the invention

Rolling bearings must be lubricated to avoid direct metallic contact between rolling bodies, bearing rings and retainer. The lubricant furthermore prevents wear and corrosion.

The most advantageous operation temperature in a rolling bearing is obtained at use of exactly as much lubricant as is absolutely necessary for reliable lubrication, i.e. rather a small quantity. Other factors, which influence the quantity of lubricant are if it shall also fullfil other tasks, such as sealing or cooling.

The lubricating ability of a lubricant is reduced with time, due to mechanical work and ageing. The used and polluted lubricant therefore must be replaced and reneved at regular time intervalls. Generally rolling bearings can be lubricated with grease during normal service conditions. The grease has the advantage compared to oil that it more easily stays in the bearing, particularly when the shaft is inclined or vertical, and that it has corrosion inhibiting properties. The choice of grease type depends on the service conditions, primarily on the current temperature range, speed and environment.

When the service conditions require frequent subsequent lubrication, the bearing housing as a rule is provided with a particular device for grease introduction, often a lubrication bore with a nipple. Heavily loaded bearings can be connected to an automatic lubrication apparatus, which continuously lubricates the bearing without need for manual work.

Today there is on the market a large number of automatic lubricating apparatuses, which operate according to different principles. All however suffer from grave function deficiencies and thus they will not provide the intended lubricating effect. In certain cases these lubrication apparatuses may be an inferior alternative when compared to manual lubrication. A deficiency often occuring is excessive grease feed, which causes a heavily raised bearing temperature. Some types even have revealed a nonexistent lubrication effect or irregular grease supply. This results in the conclusion that existing lubrication apparatuses do not give the desired regular, adapted and continuous lubrication, which is required in demanding applications. The function principles for feeding out the grease differs between the different types, but must common are spring-biased pistons and electrolytically generated driving gas, which acts upon a diaphragm connected to a piston.

At lubricating apparatuses with oil lubrication it is also known to adjust the oil supply continuously by means of heat activatable elements. In such apparatuses, see e.g. FR-A-877 500, the oil supply is normally controlled in such a manner that the oil quantity supplied increases at increasing temperature in the device intended for lubrication. If a lubricating apparatus, operating in accordance with this principle, should be used for grease lubrication of bearings, should an increased grease supply result in a further increase of the bearing housing temperature.

Purpose and most essential features of the invention

The purpose of the present invention is to provide a new type of lubricating apparatus for automatic and controlled supply of lubricating grease to rolling bearings mounted in bearing housings. A continuous lubrication shall take place, when the bearing is within the operation temperature interval, but when the bearing housing temperature increases due to excessive lubrication, the lubricating grease supply must be automatically interrupted. These and other purposes of the invention have been reached in that the invention has been given the features defined in the following claims.

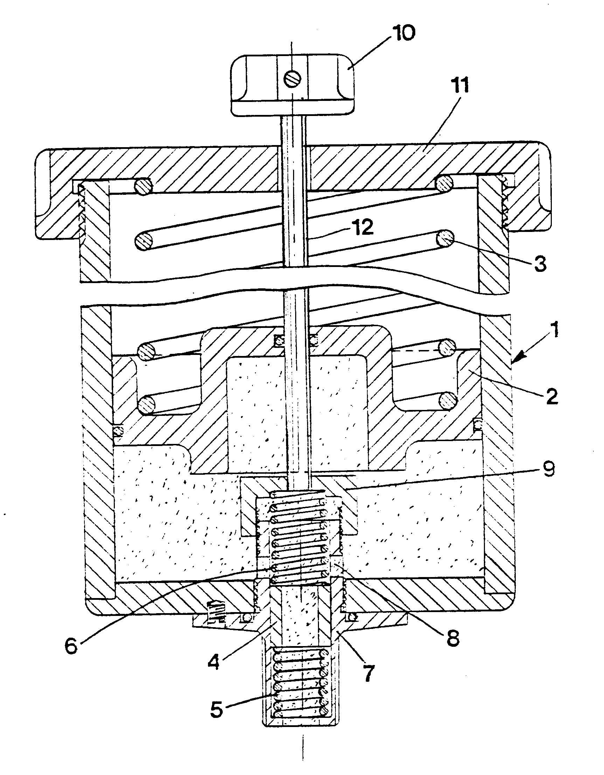

Hereinafter the invention will be further described with reference to an embodiment of a lubricating apparatus in a vertical cross section shown in the accompanying drawing.

Description of the invention

In the drawing is shown a grease injector incorporating a cylinder 1, in which a piston 2 is movably arranged. The feed force is caused by a spring 3, acting upon the piston 2. The grease is fed to a not shown bearing housing via a valve incorporating a tubular valve body 4, clamped between two springs 5 and 6. The valve body 4 is vertically movable in the valve housing 7 and may in its upper, not shown position, cover outlet openings 8 in the valve housing 7.

According to the invention the lower spring 5 is constituted by a memory metal spring, i.e. a coil spring made from a so called memory metal. Memory metals are special metal alloys, which are activated at a certain temperature. This means that the spring when shaped as coil spring may double its length at a certain activation temperature. The spring shall be reversible, i.e. it shall resume its initial length when the temperature is lowered below the activation temperature. Appropriate metal alloys are TiNi- and CuZnAl-alloys.

The upper spring 6 provides a counter force for the memory metal spring 5, in order to obtain a narrow temperature interval for its activating temperature. The spring 6 is clamped between the valve body and a nut 9 threaded upon the valve housing 7, which nut may be adjusted by means of a grip, which extends out through the cover 11 of the cylinder 1 and which via an adjustment bar 12 is connected to the nut 9.

The lower part of the valve housing 7, which surrounds the memory metal springs 5, extends into and is secured to the not shown bearing housing. The springs 5,6 thereby shall be adapted so mutually that the memory metal spring 5 under normal operation conditions in the bearing housing, will occupy its compressed position, such as shown in the drawing, whereby the valve is open and grease is continuously fed into the bearing housing. At abundant lubrication the bearing housing temperature will increase, and when a predetermined activation temperature is exceeded, e.g. 60°C the spring 5 will expand, whereby the valve body 4 will be lifted in the valve housing 7 and covers the openings 8. When the temperature sinks below the activation temperature the spring 5 will resume its initial compressed position, whereby the valve is opened again.

Tests have shown that with a lubricating apparatus according to the present invention, which apparatus has an on-off-function regarding the grease supply, is possible to limit the bearing housing temperature to the predetermined temperature, e.g. 60°C, under up to 90 % of the bearing operation time. It is only in connection with the comparatively short opening process and subsequent supply of grease to the bearing housing that temperature peaks of short duration occur. This shall be compared to the condition at the normally occuring automatic grease lubricating apparatuses, where the bearing housing temperature mainly lies at a constant level in the same size, which, with an apparatus according to the present invention, is reached for a short time only.

## Claims

1. An apparatus for automatic lubrication of bearings, which apparatus incorporates a feeding device (1,2,3) for grease and a valve member (4,5,6,7,8,9) intended to be connected to a bearing housing, **characterized therein**, that the valve member (4,5,6,7,8,9) incorporates a substantially tubular valve body (4) within a valve housing (7) and a heat activatable member engaging one end thereof and being in the form of a memory metal spring (5), which is arranged to sense the temperature of the bearing housing and to expand when a predetermined activation temperature is exceeded, whereby the memory metal spring (5) is arranged to control the valve body (4) in such a manner that said valve body (4) interrupts the supply of grease to the bearing housing at expansion of the spring (5).

2. An apparatus as claimed in claim 1, **characterized therein**,

that the memory metal spring (5) at least partly is received in a portion of the valve housing (7) projecting from a housing (1) of the lubrication apparatus, whereby said portion is designed thus that its mounting in the bearing housing is made possible.

3. An apparatus as claimed in claim 1 or 2, **characterized therein**, that the memory metal spring (5) is clamped between the valve body (4) and a portion projecting radially inwards at an outer end of the valve housing (7).

4. An apparatus as claimed in anyone of the preceeding claims, **characterized therein**, that the lubricant is arranged to be fed out axially through the memory metal spring (5).

5. An apparatus as claimed in anyone of the preceeding claims, **characterized therein**, that the valve body (4) is clamped between the memory metal spring (5) and a spring (6) provided between the valve body (4) and an inner end of the valve housing (7).

## Patentansprüche

1. Automatische Lagerschmiervorrichtung mit einer Fettzuführungsanordnung (1, 2, 3) und einem Ventilorgan (4, 5, 6, 7, 8, 9) vorgesehen an ein Lagergehäuse angeschlossen zu werden, **dadurch gekennzeichnet**, dass das Ventilorgan (4, 5, 6, 7, 8, 9) einen im wesentlichen rohrförmigen Ventilkörper (4) und einen mittels Wärme aktivierbaren, an diesen anliegenden Teil in Gestalt einer Speichermetallfeder (5) umfasst, die vorgesehen ist die Temperatur des Lagergehüses abzutasten und bei Überschreitung einer vorherbestimmten Aktivierungstemperatur zu expandieren, wobei die Speichermetallfeder (5) vorgesehen ist den Ventilkörper (4) auf solche Weise zu steuern, dass der Ventilkörper (4) bei Expasion der Feder (5) die Fettzuführung unterbricht.

2. Vorrichtung gemäss Patentanspruch 1, **dadurch gekennzeichnet**, dass die Speichermetallfeder (5) zumindestens teilweise in einem Teil des Ventilgehäuses (7) untergebracht ist, welches aus einem Gehäuse (1) der Schmiervorrichtung herausragt, wodurch dieser Teil auf eine Weise vorgesehen wird, die eine Montage im Lagergehäuse ermöglicht.

3. Vorrichtung gemäss Patentanspruch 1 oder 2, **dadurch gekennzichnet**, dass die Speichermetallfeder (5) zwischen dem Ventilkörper (4) und einem radial nach innen vorstehenden Teil an einem Aussenende des Ventilgehäuses (7) eingeklemmt ist.

4. Vorrichtung gemäss einem der vorhergehenden Patentansprüche,

**dadurch gekennzeichnet,**
dass das Schmiermittel vorgesehen ist in achsialer Richtung durch die Speichermetallfeder (5) gepresst zu werden.

5. Vorrichtung gemäss einem der vorhergehenden Patentansprüche,
**dadurch gekennzeichnet,**
dass der Ventilkörper (4) zwischen der Speichermetallfeder (5) und einer zwischen dem Ventilkörper (4) und einem innenliegenden Ende des Ventilgehäuses (7) angeordneten Feder (6) eingeklemmt ist.

## Revendications

1. Appareil pour la lubrification automatique des paliers, comprenant un dispositif d'acheminement de la graisse (1, 2, 3) et une soupape (9, 5, 6, 7, 8, 9) destinée à être reliée à un corps de palier
**caractérisé en ce que**
la soupape (4, 5, 6, 7, 8, 9) comprend un corps (4) substantiellement tubulaire dans un logement (7) et un organe activable à la chaleur en contact avec une des extrémités du corps de soupape (4) et ayant la forme d'un ressort (5) en un métal à mémoire de forme, qui est disposé pour détecter la température du palier et se dilater lorsqu'une température d'activation prédéterminée est dépassée, le ressort (5) en métal à mémoire de forme étant disposé pour commander le corps de soupape (4) de telle façon que ledit corps de soupape (4) interrompt l'acheminement de la graisse dans le palier lorsque le ressort (5) se dilate.

2. Appareil selon revendication 1,
**caractérisé en ce que**
le ressort (5) est reçu au moins partiellement dans une portion du logement de soupape (7) en saillie par rapport au boîtier (1) de l'appareil de lubrification, ladite portion étant conçue de façon que son montage dans le palier est rendu possible.

3. Appareil selon revendication 1 ou 2,
**caractérisé en ce que**
le ressort (5) en métal à mémoire de forme est serré entre le corps de soupape (4) et une portion en saillie radiale vers l'intérieur, à une extrémité extérieure du logement de soupape (7).

4. Appareil selon l'une quelconque des revendications précédentes,
**caractérisé en ce que**
le lubrifiant est disposé pour être alimenté axialement à travers le ressort (5) en métal à mémoire de forme.

5. Appareil selon l'une quelconque des revendications précédentes,
**caractérisé en ce que**
le corps de soupape (4) est serré entre le ressort (5) en métal à mémoire de forme et un ressort (6) prévu entre le corps de soupape (4) et une extrémité intérieure du logement de soupape (7).